Europäisches Patentamt

European Patent Office

Office européen des brevets

(19)

(11) **EP 0 978 439 B1**

(12) **FASCICULE DE BREVET EUROPEEN**

(45) Date de publication et mention
de la délivrance du brevet:
**21.05.2003 Bulletin 2003/21**

(51) Int Cl.⁷: **B62D 5/065**

(21) Numéro de dépôt: **99401944.6**

(22) Date de dépôt: **29.07.1999**

(54) **Procédé de pilotage d'un groupe électropompe de direction assistée hydraulique**

Verfahren zur Steuerung einer Elektropumpengruppe einer hydraulischen Servolenkung

Process for controlling an electric pump group of an hydraulic power steering

(84) Etats contractants désignés:
**BE DE ES IT**

(30) Priorité: **07.08.1998 FR 9810215**

(43) Date de publication de la demande:
**09.02.2000 Bulletin 2000/06**

(73) Titulaire: **Renault s.a.s.**
**92100 Boulogne Billancourt (FR)**

(72) Inventeurs:
• **Brousse, Pascal**
**78130 Lesmureaux (FR)**
• **Saint-Martin, Philippe**
**78800 Houilles (FR)**
• **Ouvry, Eric**
**69230 Saint Genis Laval (FR)**

(56) Documents cités:
**EP-A- 0 850 818**

## Description

L'invention concerne un procédé de pilotage d'un groupe électropompe de direction assistée hydraulique pour véhicule automobile, dans le but de réduire la consommation électrique notamment en phase de veille de la direction.

Dans le cas d'une direction assistée électrohydraulique, comprenant un moteur électrique en plus des mêmes éléments hydrauliques qu'une direction hydraulique classique, ce moteur est habituellement connecté au réseau de bord et fonctionne donc à sa vitesse nominale même en dehors des phases de sollicitation de la direction par le conducteur du véhicule, ce qui n'optimise pas la consommation électrique du système de direction.

Un procédé actuel permettant la réduction de la consommation électrique du moteur consiste à piloter la puissance fournie au moteur en fonction du besoin d'assistance, par l'intermédiaire de circuits électroniques de pilotage et de contrôle du moteur électrique. De sorte qu'en dehors des phases de braquage, la puissance dite de veille est réduite. Pour gérer les transitions entre le mode de veille et le mode d'assistance, une solution consiste à mesurer le courant consommé par le groupe électropompe puisque ce courant est représentatif de la pression dans le circuit hydraulique et donc de la demande d'assistance.

Ce courant mesuré est ensuite comparé à des seuils de déclenchement, lors des passages de la veille à l'assistance et inversement, afin de gérer la puissance à fournir au moteur du groupe électropompe.

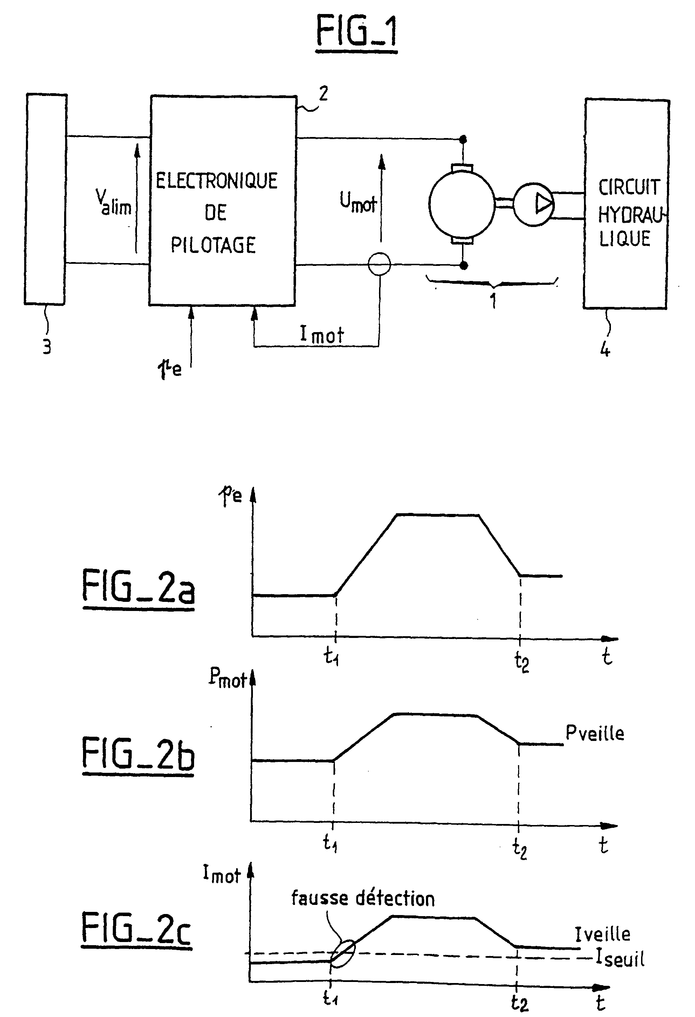

On peut être amené, pour diverses raisons comme par exemple pour optimiser le compromis entre la consommation électrique et la prestation au client, à régler ou modifier le point de fonctionnement en veille en fonction de paramètres extérieurs $p_e$ tels que la vitesse du véhicule ou le régime moteur, comme le montre le synoptique d'un groupe électropompe 1 de direction hydraulique assistée électriquement, représenté sur la figure 1. Ce groupe électropompe est piloté par un circuit électronique 2 et alimenté électriquement par le réseau électrique 3 du véhicule sous une tension $V_{alim}$. Ce groupe électropompe est relié à un circuit hydraulique classique 4.

Dans ce cas, la variation de puissance de veille provoque des variations du courant consommé et mesuré $I_{mot}$, qui peuvent être indésirables dans le traitement de cette information sur le courant.

Les demandes de brevet allemand DE 39 20 862 au nom de TEVES et de brevet français FR 2 720 447 au nom de MERCEDES-BENZ décrivent de tels systèmes de direction assistée dont la puissance électrique d'alimentation varie en fonction de tels paramètres extérieurs.

Les figures $2_a$ à $2_c$ sont trois chronogrammes respectivement d'un paramètre du véhicule $p_e$, de la puissance $P_{mot}$ d'alimentation du groupe électropompe et du courant $I_{mot}$ consommé par le groupe électropompe, en fonction du temps. Dans le cas du pilotage du point de fonctionnement du système en veille en fonction d'un paramètre comme la vitesse du véhicule par exemple, lorsque ce paramètre varie, aux instants $t_1$ et $t_2$, la puissance $P_{mot}$ est modifiée et engendre des variations du courant $I_{mot}$ consommé qui peuvent être considérées par le circuit de pilotage comme des demandes d'assistance ou au contraire comme des arrêts ou des limitations intempestifs d'assistance. Ces fluctuations du courant engendrent de fausses détections par dépassement du seuil $I_s$ prévu alors que le conducteur n'a pas sollicité sa direction.

Pour éviter cet inconvénient pouvant provoquer notamment une surconsommation du système et/ou une gêne pour le conducteur, une solution serait de définir un seuil de basculement entre l'état de veille et l'état d'assistance plus élevé que le seuil actuel, mais son inconvénient résiderait dans une prestation offerte au client moins bonne et une surconsommation du système.

Dans le but de pallier ces inconvénients, l'invention propose que la valeur du courant prise en compte pour évaluer la demande d'assistance de direction hydraulique, considérée comme un des facteurs de décision sur l'état du groupe électropompe, ne dépende pas de la puissance de veille instantanée.

Pour cela, l'objet de l'invention est un procédé de pilotage d'un groupe électropompe de direction assistée hydraulique pour véhicule automobile, par un circuit électronique, utilisant le courant consommé par le moteur du groupe électropompe comme un des facteurs de décision d'une demande d'assistance pour la direction nécessitant une variation de la puissance consommée, ladite puissance consommée par le groupe électropompe en mode veille, en dehors des phases de braquage, variant en fonction d'un paramètre extérieur au groupe tel un paramètre de fonctionnement du véhicule, caractérisé en ce qu'il consiste à :

- définir un état de veille de référence pour le fonctionnement du groupe électropompe, lors de la conception du procédé ;
- associer à cet état de veille de référence un courant de référence ;
- établir une relation entre le courant consommé par le groupe électropompe pour une puissance de veille imposée par le circuit de pilotage et un courant équivalent estimé pour une puissance correspondant à l'état de veille de référence ;
- utiliser ledit courant équivalent comme critère de détection de demande d'assistance pour la direction hydraulique.

Selon une seconde caractéristique, l'invention consiste à définir un courant équivalent à partir du courant consommé par le groupe électropompe et mesuré par le circuit électronique de pilotage, et de la tension d'alimentation électrique du groupe électropompe.

Selon une troisième caractéristique, l'invention consiste à définir un courant équivalent à partir du courant consommé par le groupe électropompe et mesuré par le circuit électronique de pilotage, et de la vitesse de rotation du moteur du groupe électropompe.

D'autres caractéristiques et avantages de l'invention apparaîtront à la lecture de la description du procédé de pilotage, illustrée par les figures suivantes qui sont, outre les figures 1, $2_a$ à $2_c$ déjà mentionnées :

- la figure 3 : différentes caractéristiques du groupe électropompe relatives au débit de la pompe en fonction de la pression, sous différentes tensions d'alimentation du groupe électropompe ;
- la figure 4 : les caractéristiques de la pompe et du circuit de charge du groupe électropompe relatives au débit et à la pression, pour une tension d'alimentation donnée ;
- la figure 5 : différentes caractéristiques de la pompe et du circuit de charge du groupe électropompe selon plusieurs tensions d'alimentation ;
- les figures $6_a$ à $6_c$ : trois chronogrammes respectivement d'un paramètre $p_e$ du véhicule, de la puissance $P_{mot}$ d'alimentation du groupe électropompe et du courant $I_{eq}$ équivalent en fonction du temps, selon le procédé de l'invention.

L'objet de l'invention s'applique aux directions assistées électrohydrauliques, pour lesquelles la puissance électrique fournie au groupe électropompe est pilotée électroniquement à partir d'un ou plusieurs facteurs de décision dont le courant du moteur du groupe électropompe, représentatif de la demande d'assistance par le conducteur du véhicule, et pour lesquelles le niveau de la puissance de veille dépend d'au moins un paramètre de fonctionnement du véhicule tel que la vitesse ou le régime moteur.

Dans le cas d'un moteur à courant continu, le contrôle du groupe électropompe, en vitesse ou directement en tension du moteur, demande un pilotage de la tension aux bornes du moteur. Donc, une modification du point de fonctionnement en veille, en fonction du paramètre vitesse véhicule par exemple, entraîne une modification de la tension $U_{mot}$ aux bornes du moteur qui va elle-même provoquer une fluctuation du courant $I_{mot}$ consommé par le moteur. Il est important de tenir compte de cette variation du courant pour éviter les fausses détections de demande d'assistance.

Le principe de l'invention consiste :

- à choisir une puissance de veille de référence ;
- à associer à cette puissance de veille de référence un courant de veille de référence ;
- à établir une relation entre le courant consommé par le groupe électropompe pour une puissance de veille imposée par le circuit de pilotage et un courant équivalent estimé pour une puissance correspondant à l'état de veille de référence ;

- à utiliser la différence entre le courant équivalent et le courant de veille de référence comme un des critères de détection de demande d'assistance pour la direction hydraulique.

Cette puissance de veille de référence peut être déterminée par exemple pour une tension d'alimentation de référence ou pour une vitesse de rotation de référence du moteur.

Dans un premier cas d'un moteur à courant continu à balais piloté en tension, l'invention détermine une relation permettant de caractériser un courant équivalent au courant consommé par le moteur et qui est fonction à la fois de ce courant mesuré et de la tension d'alimentation du moteur. Le courant équivalent $I_{eq}$ est défini pour une tension de veille de référence $U_{ref}$ prédéfinie lors de la conception du procédé de pilotage, et à laquelle correspond un courant de référence $I_{ref}$.

Le système de direction assistée électrohydraulique comprend d'une part un groupe électropompe, c'est-à-dire un moteur à courant continu, dont la caractéristique de sortie est le couple en fonction de la vitesse de rotation, accouplé à une pompe de cylindrée q fournissant un débit Q sous une pression P, et d'autre part un circuit hydraulique connecté au groupe électropompe et ayant sa propre caractéristique débit-pression lors des phases de non sollicitation de la direction. Le point de fonctionnement du système est défini par l'intersection des deux caractéristiques en débit et pression de la pompe et du circuit hydraulique de charge.

Dans le cas d'un système de direction assistée électrohydraulique supposé sans perte, l'expression de la tension d'alimentation du moteur $U_{mot}$, en fonction du courant $I_{mot}$ consommé par le moteur et de sa vitesse de rotation $\Omega_{mot}$, en négligeant l'inductance, est la suivante :

$$(E_1) : U_{mot} = R^*I_{mot} + k^*\Phi^*\Omega_{mot}$$

avec

$\Omega_{mot}$ :    vitesse de rotation en radians/seconde,
$k$ :        constante de force électromotrice,
$I_{mot}$ :     courant en ampères,
$U_{mot}$ :    tension en volts,
$R$ :        résistance de l'induit du moteur en ohms,
$\Phi$ :        flux traversant l'induit en webers.

Sachant que, d'une part, les caractéristiques du moteur sont la vitesse de rotation $\Omega_{mot}$ et le couple C qui est égal à :

$$C = k^*\Phi^*I_{mot}$$

et que, d'autre part, les caractéristiques de sortie de la pompe hydraulique à laquelle le moteur est accouplé sont la pression P en bars, qui est égale au rapport du couple C par la cylindrée q en $m^3$/rad, soit :

$$P = C/q$$

et le débit Q en $m^3$/s, qui est égal au produit de la vitesse de rotation $\Omega_{mot}$ par la cylindrée q en $m^3$/rad, soit :

$$Q = \Omega_{mot}*q$$

alors la caractéristique définissant le groupe électropompe a pour équation :

$$(E_2)\ U_{mot} = (R*q*P)/(k*\Phi) + (k*\Phi*Q)/q$$

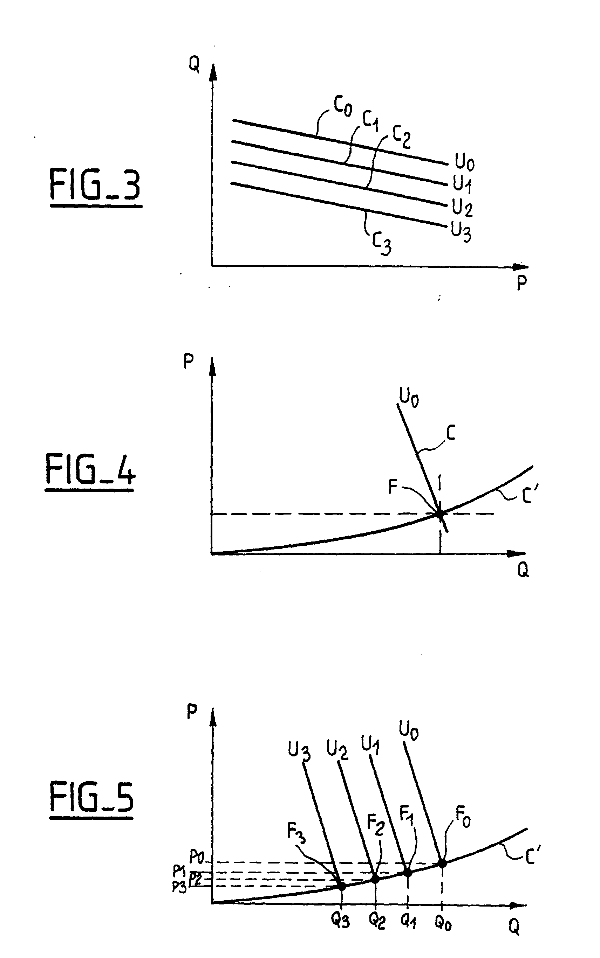

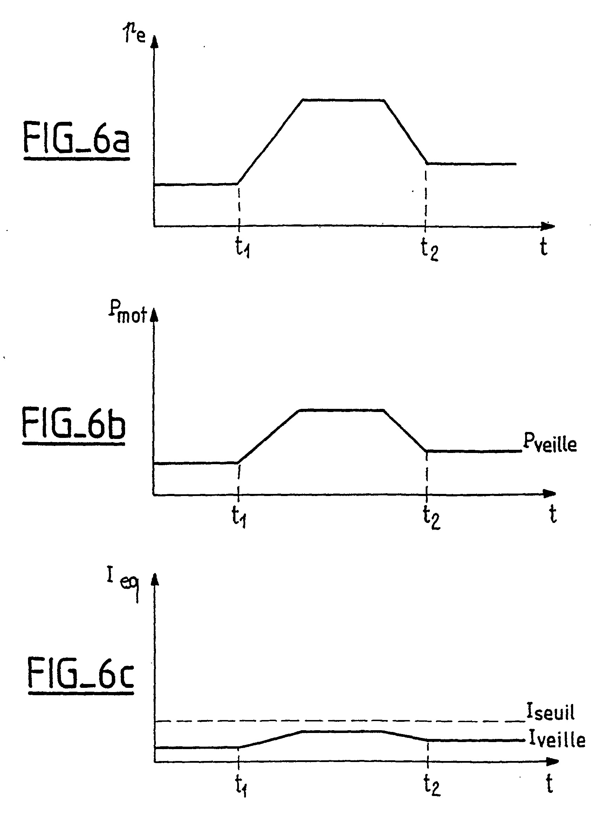

La figure 3 représente différentes caractéristiques $C_o$ à $C_3$ du débit Q en fonction de la pression P du groupe électropompe alimenté sous différentes tensions $U_0$, $U_1$, $U_2$ et $U_3$.

La caractéristique du circuit hydraulique du système de direction assistée, traduisant le débit en fonction de la pression, est représentée par la courbe C' sur la figure 4 et coupe la caractéristique C du groupe électropompe, associée au circuit hydraulique pour constituer le système d'assistance, en un point F correspondant au point de fonctionnement du système de direction assistée. Quand elle est au repos, sans sollicitation du volant par le conducteur, la caractéristique du circuit hydraulique de charge au premier ordre est une loi de type $Q^2$. Quand la pompe tourne moins vite, le débit est plus faible et les pertes de charge dans le circuit hydraulique diminuent. La pression diminuant, le couple du moteur aussi de sorte que le courant mesuré $I_{mot}$ est plus faible. Ainsi, le point d'équilibre est lié au réseau hydraulique.

Le point de fonctionnement en veille du système de direction assistée varie en fonction des valeurs prises par la tension d'alimentation, comme le montre la figure 5. Pour les valeurs $U_0$ à $U_3$ de la tension du moteur du groupe électropompe, le point de fonctionnement est à l'intersection des courbes $C_0$ à $C_3$ du groupe électropompe sous différentes tensions $U_0$ à $U_3$ et de la courbe C' du circuit hydraulique et prend donc les valeurs $F_0$ à $F_3$. Ce point de fonctionnement définissant la pression de sortie de la pompe caractérise donc le couple du moteur électrique et le courant consommé. Lorsque la direction est au repos, la pression est faible et on peut assimiler en première approximation la caractéristique du circuit hydraulique à une droite :

$$(E_3) : P = \alpha*Q + \beta$$

$\alpha$ et $\beta$ étant des coefficients caractérisant le circuit hydraulique de charge et définis sur banc ou sur véhicule. Comme la pression est la signature du courant consommé par le groupe électropompe :

$$P = k*\Phi*I_{mot}/q,$$

et que d'après l'équation $(E_1)$, le débit Q est égal à :

$$Q = q * [(U_{mot} - R*I_{mot})/k*\Phi],$$

on en déduit que :

$$(E_4)\ I = \Gamma*U_{mot} + \delta.$$

Ainsi, alors que le conducteur ne braque pas les roues du véhicule, une variation de la tension $U_{mot}$ entraîne une variation linéaire du courant $I_{mot}$ consommé ainsi qu'un déplacement du point de fonctionnement sur la caractéristique débit/pression (figure 5).

De là, le courant correspondant aux différents points de fonctionnement du système de direction en mode veille en fonction de la tension d'alimentation du moteur dépend linéairement de cette tension. La détermination du paramètre $\Gamma$ est réalisée expérimentalement.

L'invention consiste alors à choisir la tension de veille de référence $U_{ref}$ à laquelle correspond un courant de veille $I_{ref}$, et à définir un courant équivalent $I_{eq}$ à partir du courant $I_{mot}$, réellement consommé par le groupe électropompe et mesuré par le circuit de pilotage, et de la différence entre la tension d'alimentation $U_{mot}$ du moteur et la tension de veille de référence $U_{ref}$, selon la relation :

$$(E_5) : I_{eq} = I_{mot} + \Gamma*(U_{mot}-U_{ref}).$$

Dans un second cas d'un moteur à courant continu sans balai, il peut être soit piloté en tension comme un moteur à balais soit piloté en vitesse. Dans ce cas, l'invention détermine une relation servant à caractériser un courant équivalent au courant consommé par le moteur et qui est fonction à la fois de ce courant mesuré et de la vitesse du moteur. Ce courant équivalent est défini pour une vitesse de veille de référence $\Omega_{ref}$, prédéfinie lors de la conception du procédé de pilotage et à laquelle correspond un courant de veille de référence $I_{ref}$. Il est donc défini par la relation $E_6$, reliant le courant mesuré $I_{mot}$ réellement consommé par le groupe électropompe et la différence entre la vitesse de rotation $\Omega_{mot}$ et la vitesse de rotation de veille de référence $\Omega_{ref}$ :

$$(E_6) : I_{eq} = I_{mot} + \in*(\Omega_{mot}-\Omega_{ref}),$$

$\in$ étant un paramètre déterminé expérimentalement.

De ces deux relations $E_5$ et $E_6$, on constate que le courant équivalent servant de critère de détection d'une demande d'assistance pour la direction est indépendant de la puissance de veille utilisée pour alimenter le moteur du groupe électropompe. Cette détection n'est plus perturbée par des modifications de la puissance d'alimentation du groupe électropompe en mode veille.

L'état du système de direction assistée est déterminé en fonction d'un ou plusieurs facteurs, dont la comparaison entre le courant équivalent calculé et le courant de référence correspondant à la puissance de veille de référence alimentant le groupe électropompe hors périodes de braquage.

Le courant de référence est défini expérimentalement en fonction de la puissance de veille de référence choisi ou peut être redéfini au cours de l'utilisation du véhicule afin de prendre en compte les variations lentes du système d'assistance de direction dues à différents facteurs comme la viscosité de l'huile, la température de l'huile et/ou celle du moteur, etc...

Les figures $6_a$ à $6_c$ sont les chronogrammes respectivement de la vitesse du véhicule choisie comme paramètre extérieur $p_e$ dont dépend la puissance consommée par le groupe électropompe en mode veille, de ladite puissance consommée $P_{mot}$ et enfin du courant équivalent $I_{eq}$ défini selon l'invention. On remarque que ce courant ne dépend pas ou très peu de la puissance de veille et sert donc de critère de détection d'une demande d'assistance évitant les fausses détections soit de demande, soit d'arrêt, soit de limitation d'assistance, puisqu'il reste inférieur au seuil $I_S$.

Le procédé selon l'invention est simple à mettre en oeuvre, permet d'optimiser les valeurs prédéterminées de seuil de détection et de réduire la consommation électrique globale tout en offrant une bonne prestation de confort au conducteur du véhicule.

## Revendications

1.  Procédé de pilotage d'un groupe électropompe de direction assistée électrohydraulique pour véhicule automobile, par un circuit électronique, utilisant le courant consommé par le moteur du groupe électropompe comme un des facteurs de décision d'une demande d'assistance pour la direction nécessitant une variation de la puissance consommée, ladite puissance consommée par le groupe électropompe en mode veille, en dehors des phases de braquage, variant en fonction d'un paramètre extérieur au groupe tel un paramètre de fonctionnement du véhicule, **caractérisé en ce qu'**il consiste à :

    -   définir un état de veille de référence pour le fonctionnement du groupe électropompe ;
    -   associer à cet état de veille de référence un courant de référence ;
    -   établir une relation entre le courant consommé par le groupe électropompe pour une puissance de veille imposée par le circuit de pilotage et un courant équivalent estimé pour une puissance correspondant à l'état de veille de référence ;
    -   utiliser la différence entre le courant équivalent et le courant de veille de référence comme critère de détection de demande d'assistance pour la direction hydraulique.

2.  Procédé de pilotage selon la revendication 1, **caractérisé en ce que** la puissance consommée par le groupe électropompe en état de veille dit de référence est déterminée pour une tension d'alimentation ($U_{ref}$) de référence du moteur.

3.  Procédé de pilotage selon la revendication 1, **caractérisé en ce que** la puissance consommée par le groupe électropompe en état de veille dit de référence est déterminée pour une vitesse de rotation ($\Omega_{ref}$) de référence du moteur.

4.  Procédé de pilotage selon la revendication 2, **caractérisé en ce qu'**il définit un courant équivalent ($I_{eq}$) à partir du courant ($I_{mot}$) réellement consommé par le groupe électropompe et mesuré par le circuit de pilotage et de la différence entre la tension d'alimentation ($U_{mot}$) du moteur et la tension d'alimentation ($U_{ref}$) de référence, en mode veille, à laquelle correspond un courant de référence ($I_{ref}$) selon la relation :

    $$I_{eq} = I_{mot} + \Gamma^*(U_{mot}-U_{ref})$$

    avec $\Gamma$ : paramètre défini expérimentalement.

5.  Procédé de pilotage selon la revendication 3, **caractérisé en ce qu'**il définit un courant équivalent ($I_{eq}$) à partir du courant ($I_{mot}$) réellement consommé par le groupe électropompe et mesuré par le circuit de pilotage et de la différence entre la vitesse de rotation ($\Omega_{mot}$) du moteur et la vitesse de rotation ($\Omega_{ref}$) de référence, en mode veille, à laquelle correspond un courant de référence ($I_{ref}$) selon la relation :

    $$I_{eq} = I_{mot} + \in^*(\Omega_{mot}-\Omega_{ref})$$

    avec $\in$ : paramètre défini expérimentalement.

6.  Procédé de pilotage selon la revendication 1, **caractérisé en ce que** le courant de veille de référence est défini expérimentalement en fonction de la puissance de veille de référence choisie

**7.** Procédé de pilotage selon la revendication 1, **caractérisé en ce que** le courant de veille de référence est redéfini au cours de l'utilisation du véhicule afin de prendre en compte les variations lentes du système d'assistance de direction due à différents facteurs comme la viscosité de l'huile, la température de l'huile et/ou celle du moteur.

**Patentansprüche**

**1.** Verfahren zur Steuerung des Elektropumpenaggregats für die hydraulische Servolenkung eines Kraftfahrzeuges mittels eines elektronischen Schaltkreises, der den vom Motor des Elektropumpenaggregats verbrauchten Strom als einen der Faktoren für die Entscheidungsfindung für die Anforderung der Servolenkung verwendet, die eine Veränderung der verbrauchten Leistung bedingt, wobei diese vom Elektropumpenaggregat während der Ruhephase verbrauchte Leistung außerhalb der Phasen der Lenkungsbetätigung als Funktion eines außerhalb des Aggregats angesiedelten Parameters, zum Beispiel eines Betriebsparameters des Fahrzeuges, variiert, **dadurch gekennzeichnet, dass** es darin besteht, dass:

- ein Referenzruhezustand für den Betrieb des Elektropumpenaggregats definiert wird;
- diesem Referenzruhezustand ein Referenzstrom zugeordnet wird;
- eine Beziehung aufgestellt wird zwischen dem von dem Elektropumpenaggregat verbrauchten Strom für eine Ruheleistung als vorgegebener Wert durch den Steuerkreis und einem geschätzten äquivalenten Strom für eine Leistung, die dem Referenzruhezustand entspricht;
- die Differenz zwischen diesem äquivalenten Strom und dem Referenzruhestrom als Kriterium zur Feststellung der Anforderung zur Unterstützung der hydraulischen Lenkung verwendet wird.

**2.** Verfahren zur Steuerung nach Anspruch 1, **dadurch gekennzeichnet, dass** die vom Elektropumpenaggregat während des Ruhezustands verbrauchte Leistung, die sogenannte Referenzleistung, bestimmt wird für eine Referenzversorgungsspannung ($U_{ref}$) des Motors.

**3.** Verfahren zur Steuerung nach Anspruch 1, **dadurch gekennzeichnet, dass** die vom Elektropumpenaggregat im Ruhezustand verbrauchte Leistung, die sogenannte Referenzleistung, bestimmt wird für eine Referenzdrehgeschwindigkeit ($\Omega_{ref}$) des Motors.

**4.** Verfahren zur Steuerung nach Anspruch 2, **dadurch gekennzeichnet, dass** ein äquivalenter Strom ($I_{eq}$) definiert wird ausgehend von dem vom Elektropumpenaggregat tatsächlich verbrauchten und vom Steuerkreis gemessenen Strom ($I_{mot}$) und von der Differenz zwischen der Versorgungsspannung ($U_{mot}$) des Motors und der Referenzversorgungsspannung ($U_{ref}$) im Ruhezustand, der ein Referenzstrom ($I_{ref}$) entspricht, gemäss der Beziehung:

$$I_{eq} = I_{mot} + \Gamma^* (U_{mot} - U_{ref})$$

wobei $\Gamma$ ein experimentell ermittelter Parameter ist.

**5.** Verfahren zur Steuerung nach Anspruch 1, **dadurch gekennzeichnet, dass** ein äquivalenter Strom ($I_{eq}$) definiert wird ausgehend von dem vom Elektropumpenaggregat tatsächlich verbrauchten und vom Steuerkreis gemessenen Strom ($I_{mot}$) und von der Differenz zwischen der Drehgeschwindigkeit ($\Omega_{mot}$) des Motors und der Referenzdrehgeschwindigkeit ($\Omega_{ref}$) im Ruhezustand, der ein Referenzstrom ($I_{ref}$) entspricht, gemäss der Beziehung:

$$I_{eq} = I_{mot} + \varepsilon^*(\Omega_{mot} - \Omega_{ref})$$

wobei $\acute{\varepsilon}$ ein experimentell ermittelter Parameter ist.

**6.** Verfahren zur Steuerung nach Anspruch 1, **dadurch gekennzeichnet, dass** der Referenzruhestrom experimentell als Funktion der gewählten Referenzleistung im Ruhezustand ermittelt wird.

**7.** Verfahren zur Steuerung nach Anspruch 1, **dadurch gekennzeichnet, dass** der Referenzruhestrom während des Einsatzes des Fahrzeuges erneut ermittelt wird um dadurch die langsamen Veränderungen des Systems der Servolenkung als Folge verschiedener Faktoren wie die Viskosität des Öls, der Temperatur des Öls und/oder des Motors zu berücksichtigen.

**Claims**

**1.** A process for pilot control of an electrical pump unit of electrohydraulic power-assisted steering for a motor vehicle, by an electronic circuit, using the current consumed by the motor of the electrical pump unit as one of the factors for deciding on a power-assistance demand for the steering necessitating a variation in the power consumed, said power consumed by the electrical pump unit in the standby mode outside of the lock-application phases varying as a function of a parameter which is external to the unit such as an operating parameter of the vehicle, **characterised in that** it comprises:

- defining a reference standby state for operation of the electrical pump unit,
- associating a reference current with that reference standby state,
- establishing a relationship between the current consumed by the electrical pump unit for a standby power imposed by the pilot-control circuit and an estimated equivalent current for a power corresponding to the reference standby state, and
- using the difference between the equivalent current and the reference standby current as a criteria for detection of a demand for power assistance for the hydraulic steering.

2. A pilot-control process according to claim 1 **characterised in that** the power consumed by the electrical pump unit in the standby state referred to as the reference standby state is determined for a reference power supply voltage ($U_{ref}$) of the motor.

3. A pilot-control process according to claim 1 **characterised in that** the power consumed by the electrical pump unit in the standby state referred to as the reference standby state is determined for a reference rotary speed ($\Omega_{ref}$) of the motor.

4. A pilot-control process according to claim 2 **characterised in that** it defines an equivalent current ($I_{eq}$) from the current ($I_{mot}$) really consumed by the electrical pump unit and measured by the pilot-control circuit and the difference between the power supply voltage ($U_{mot}$) of the motor and the reference power supply voltage ($U_{ref}$) in the standby mode to which there corresponds a reference current ($I_{ref}$) in accordance with the relationship:

$$I_{eq} = I_{mot} + \Gamma^*(U_{mot}-U_{ref})$$

with $\Gamma$: an experimentally defined parameter.

5. A pilot-control process according to claim 2 **characterised in that** it defines an equivalent current ($I_{eq}$) from the current ($I_{mot}$) really consumed by the electrical pump unit and measured by the pilot-control circuit and the difference between the rotary speed ($\Omega_{mot}$) of the motor and the reference rotary speed ($\Omega_{ref}$) in the standby mode to which there corresponds a reference current ($I_{ref}$) in accordance with the relationship:

$$I_{eq} = I_{mot} + \varepsilon^* (\Omega_{mot}-\Omega_{ref})$$

with $\varepsilon$: an experimentally defined parameter.

6. A pilot-control process according to claim 1 **characterised in that** the reference standby current is experimentally defined as a function of the selected reference standby power.

7. A pilot-control process according to claim 1 **characterised in that** the reference standby current is redefined in the course of use of the vehicle in order to take account of the slow variations in the steering power assistance system due to different factors such as the viscosity of the oil, the temperature of the oil and/or that of the motor.

# FIG_1

# FIG_2a

# FIG_2b

# FIG_2c

FIG_3

FIG_4

FIG_5

**FIG_6a**

**FIG_6b**

**FIG_6c**